# DEMANDE DE BREVET EUROPEEN

(11) **EP 2 181 878 A1**
(43) Date de publication de la demande: **05.05.2010**
(21) Numéro de dépôt: 09173244.6
(22) Date de dépôt: 16.10.2009
(51) Int. Cl.: B60K 31/04, B60K 35/00, B60K 37/06

(54) **Interface homme machine de commande de véhicule automobile**

(30) Priorité: 30.10.2008 FR 0857413
(71) Demandeur: Peugeot Citroën Automobiles SA, 78140 Vélizy-Villacoublay (FR)
(72) Inventeur: Nicolas, Laurent, 92800 PUTEAUX (FR); Vrinat, David, 92140 CLAMART (FR)
(74) Mandataire: Vigand, Régis Louis Michel

(57) **Abrégé**

L'invention concerne une interface homme machine de commande de véhicule automobile, comprenant un écran de commande reconfigurable qui présente des touches tactiles (11 à 74) dont le nombre, l'emplacement et les fonctions représentées peuvent varier, et dont l'actionnement active les fonctions représentées, **caractérisée en ce que**, au moins une page d'affichage (1, 1A, 3, 4, 5, 6, 7) de l'écran de commande comprend plusieurs touches tactiles (11 à 74) représentant des fonctions d'aide à la conduite de véhicule automobile.

## Description

L'invention concerne le domaine des interfaces homme machine de commande de véhicule automobile, et plus particulièrement des interfaces homme machine de commande comprenant un écran reconfigurable.

Un tel art antérieur est par exemple décrit dans la demande de brevet américain US 2007/0093980. L'écran utilisé est un écran à retour haptique. Cet écran reconfigurable ne comprend que des touches tactiles représentant des fonctions de confort, comme par exemple la navigation, l'audio ou la téléphonie. Dans cet écran reconfigurable, aucune page d'affichage ne représente des fonctions de sécurité comme les fonctions d'aide à la conduite. En effet, ces fonctions d'aide à la conduite, ayant une répercussion directe, sinon immédiate, sur le comportement du véhicule que le conducteur conduit, toute erreur dans la manipulation de la part du conducteur, voire tout tâtonnement excessif, risque de coûter cher, sinon en dommages corporels ou matériels, à tout le moins en stress et en inconfort, non seulement pour le conducteur ayant provoqué l'erreur, mais aussi pour le ou les autres passagers réduits à la subir.

Si un écran reconfigurable présente, par rapport à un clavier de boutons classiques, clairement des avantages en termes de souplesse et de richesse, il n'en demeure pas moins que le changement permanent du nombre et de l'emplacement des touches tactiles, ainsi que des fonctions représentées par les touches tactiles, handicape le conducteur dans l'utilisation de l'écran reconfigurable, non seulement pendant la phase d'apprentissage, mais aussi ensuite en régime de croisière, c'est-à-dire en phase d'utilisation normale.

En effet, le conducteur risque de conserver souvent, surtout dès qu'il n'aura plus utilisé son écran reconfigurable pendant un certain temps, une hésitation ou un doute quant à l'endroit précis sur l'écran reconfigurable où doit aller se poser son doigt pour actionner la touche tactile permettant l'activation de la fonction voulue, parce-que les pages d'affichage et les touches tactiles qu'elles comportent bougent souvent, dès que l'on change de page d'affichage sur l'écran reconfigurable. Cette hésitation ou ce doute vont l'inciter à détourner plus le regard de la route ou de la scène qui se trouve devant le véhicule qu'il conduit, qu'il ne le devrait pour conserver toute la sécurité désirable à sa conduite. Le conducteur va détourner le regard d'abord pour être sûr d'avoir bien repéré la bonne touche tactile, et ensuite il va conserver le regard détourné le temps nécessaire pour guider visuellement le doigt de sa main jusque dans un voisinage suffisamment proche de la touche tactile pour être certain que son doigt aura peu de chances de la manquer alors même que son regard sera revenu dans l'axe du véhicule pour observer la route qui se trouve devant son véhicule.

Or, contrairement à ce préjugé existant dans l'art antérieur, une fois la période d'apprentissage passée, le conducteur devient tout à fait à même de pouvoir actionner la bonne touche tactile sur un écran de commande reconfigurable disposé sur la planche de bord, même si cet écran de commande est situé relativement bas. En effet, le conducteur pourra se contenter de détourner le regard de manière seulement fugitive, tout en conservant de bonnes chances d'atteindre la touche tactile voulue, pourvu qu'il la repère vite et qu'une fois repérée, il n'ait pas besoin de guider son doigt jusque dans un voisinage proche de la touche tactile.

Ainsi, l'invention a choisi d'implémenter dans un écran de commande reconfigurable des touches tactiles représentatives de fonctions d'aide à la conduite. Pour au moins une page d'affichage du menu d'aide à la conduite, de préférence pour plusieurs d'entre elles et avantageusement pour toutes, des touches tactiles représentant des fonctions d'aide à la conduite sont implémentées dans un écran de commande reconfigurable. De préférence, la taille des touches tactiles représentant des fonctions d'aide à la conduite est suffisamment importante pour permettre au doigt du conducteur de l'atteindre avec un accompagnement visuel minimal, donc un détournement de regard du conducteur hors de la route qui doit rester bref. Avantageusement, le nombre de touches tactiles représentant des fonctions d'aide à la conduite est suffisamment limité pour permettre à l'oeil du conducteur de la repérer rapidement avec un détournement de son regard hors de l'axe de la route qui reste bref, sans risquer de le confondre avec l'une des autres touches tactiles représentées sur la page d'affichage de l'écran de commande reconfigurable.

Selon l'invention, il est prévu une interface homme machine de commande de véhicule automobile, comprenant un écran de commande reconfigurable qui présente des touches tactiles dont le nombre, l'emplacement et les fonctions représentées peuvent varier, et dont l'actionnement active les fonctions représentées, **caractérisée en ce que**, au moins une page d'affichage de l'écran de commande comprend plusieurs touches tactiles représentant des fonctions d'aide à la conduite de véhicule automobile.

De préférence, l'écran de commande est un écran à retour haptique. Un écran à retour haptique est un écran qui, lors de l'activation d'une touche tactile lui appartenant, donne un retour tactile à l'utilisateur, c'est-à-dire un retour qui peut être senti par le doigt de l'utilisateur ayant activé ladite touche tactile. Ce retour tactile est le plus souvent une série de mouvements dans le plan de l'écran dont la nature et la fréquence donnent l'impression, au doigt de l'utilisateur, d'une vibration orthogonale au plan de l'écran. Ainsi, l'utilisateur a comme l'impression d'avoir « enfoncé » un bouton. L'intérêt d'utiliser un écran de commande à retour haptique réside dans le fait qu'il diminue la durée de détournement du regard du conducteur de la route vers l'écran de commande puisqu'il confirme tout de suite au conducteur que sa pression sur la touche de commande a bien été prise en compte, avant même que le conducteur soit apte à s'en rendre compte par visualisation d'un affichage de retour d'information sur l'écran d'affichage. En plus, cette confirmation immédiate de prise en compte améliore la sécurité car elle empêche une montée de stress ou d'agacement chez le conducteur qui tâtonnerait avant de réaliser par la visualisation de l'affichage du retour d'information sur l'écran d'affichage que sa commande a bien été prise en compte.

De préférence, l'écran de commande est complètement lisse, et avantageusement complètement plat. L'écran pourrait aussi être lisse et courbe. Surtout si l'écran de commande est à retour haptique, la présence guidante et rassurante d'un relief sur la surface de l'écran de commande ne s'impose plus, et la suppression de ce relief rend la fabrication de l'écran plus simple tout en lui garantissant un maximum de reconfigurabilité.

Pour améliorer la capacité du conducteur à repérer d'un coup d'oeil furtif la bonne touche tactile et à abandonner rapidement le guidage visuel de son doigt avant que celui-ci soit arrivé dans un voisinage proche de la bonne touche tactile, tout en gardant de bonnes chances que son doigt entre en contact avec la bonne touche tactile rapidement et sans trop errer au niveau des autres touches tactiles de la page d'affichage de l'écran de commande reconfigurable, la taille des touches tactiles utilisées est préférentiellement relativement importante. Par ailleurs, pour maintenir la taille de l'écran de commande reconfigurable dans des limites raisonnables tout en autorisant un minimum d'options pour chaque page d'affichage, la taille des touches tactiles est avantageusement maintenue inférieure à un certain seuil. Par ailleurs, toujours dans le même but de permettre au conducteur à la fois d'être très rapide, notamment au niveau du repérage de la bonne touche tactile parmi l'ensemble des touches tactiles disponibles sur la page d'affichage, le nombre de touches tactiles représentant des fonctions d'aide à la conduite est préférentiellement limité. De manière similaire, pour disposer toujours d'un minimum d'options par page d'affichage, ce même nombre est avantageusement maintenu supérieur à un certain seuil.

De préférence, pour plusieurs de ces touches tactiles représentant des fonctions d'aide à la conduite de véhicule automobile, la touche tactile recouvre entièrement au moins un carré de 2 cm de côté. Avantageusement, pour plusieurs de ces touches tactiles représentant des fonctions d'aide à la conduite de véhicule automobile, la touche tactile est entièrement incluse dans un carré de 5 cm de côté. Préférentiellement, pour toutes les touches tactiles représentant des fonctions d'aide à la conduite de véhicule automobile, la touche tactile d'une part recouvre entièrement au moins un carré de 2 cm de côté, avantageusement au moins un carré de 2.5cm de côté. Préférentiellement, pour plusieurs de ces touches tactiles représentant des fonctions d'aide à la conduite de véhicule automobile, la touche tactile d'une part recouvre entièrement au moins un carré de 3 cm de côté. De préférence, chaque page d'affichage de touches tactiles représentant des fonctions d'aide à la conduite de véhicule automobile comprend au maximum 6 touches tactiles représentant des fonctions d'aide à la conduite de véhicule automobile. Avantageusement, chaque page d'affichage de touches tactiles représentant des fonctions d'aide à la conduite de véhicule automobile comprend au minimum 4 touches tactiles représentant des fonctions d'aide à la conduite de véhicule automobile. Les caractéristiques de seuil minimum et maximum, tant au niveau de la taille des touches tactiles que de leur nombre, peuvent être utilisées seules, toutes ensemble, ou en combinaison partielle les unes avec les autres.

De préférence, l'écran de commande est rectangulaire, il comprend au plus deux lignes de touches tactiles représentant des fonctions d'aide à la conduite et au plus trois colonnes de touches tactiles représentant des fonctions d'aide à la conduite. Ainsi, dans ce cas, l'espace disponible sur la façade de l'écran de commande reconfigurable est réparti en zones aisément reconnaissables instinctivement par le conducteur, à savoir pour l'encombrement maximal de 6 touches tactiles, la zone « en haut à gauche », la zone « en haut au milieu », la zone « en haut à droite », la zone « en bas à gauche », la zone « en bas au milieu », la zone « en bas à droite ». Les doigts de la main du conducteur, lorsqu'ils arrivent au niveau de l'écran de commande, même s'ils ne sont plus accompagnés visuellement par l'oeil du conducteur, et s'ils ont un peu déviés dans leur mouvement, peuvent alors plus facilement récupérer la bonne touche tactile en s'aidant tactilement des bords de l'écran de commande reconfigurable. Une autre disposition intéressante correspond à un encombrement de 4 touches tactiles qui sont réparties dans les zones suivantes : la zone « en haut à gauche », la zone « en haut à droite », la zone « en bas à gauche », la zone « en bas à droite ».

De préférence, d'une part au-dessus de chacune des touches tactiles de la ligne du haut est disposée une explication textuelle de la touche tactile correspondante et d'autre part au-dessous de chacune des touches tactiles de la ligne du bas est disposée une explication textuelle de la touche tactile correspondante. Ces explications textuelles aident le conducteur à mieux comprendre les pictogrammes représentés sur les touches tactiles. Elles peuvent facilement être mises dans la langue supposée du conducteur, c'est-à-dire la langue du pays où sera vendu le véhicule. Elles sont surtout utiles en phase d'apprentissage. En effet, une fois le conducteur familiarisé avec les pictogrammes affichés sur les touches tactiles, il délaisse les explications textuelles pour ne plus focaliser son regard que sur les pictogrammes afin de réduire le temps de détournement hors de la route de ce regard qui doit principalement être dirigé sur la route lorsque le conducteur conduit son véhicule.

De préférence, parmi la ou les fonctions d'aide à la conduite, se trouvent un ou plusieurs des types de fonctions suivantes : régulation de vitesse avec ou sans respect de temps inter véhicules, limitation de vitesse, alerte au franchissement involontaire de ligne, aide au parking.

De préférence, la planche de bord comprend un écran d'affichage d'information au moins à la demande de l'écran de commande, physiquement distinct de l'écran de commande. L'actionnement de touches tactiles de l'écran de commande active des fonctions des menus, laquelle activation va se traduire le plus souvent par une modification de l'affichage représenté sur l'écran d'affichage. La séparation physique des écrans de commande et d'affichage permet une meilleure implantation dans l'habitacle du véhicule, dans la mesure où les contraintes d'implantation de ces deux écrans ne sont pas les mêmes, notamment en termes de localisation et d'orientation, l'écran de commande devant être facilement accessible aux doigts de la main du conducteur, l'écran d'affichage devant être facilement accessible aux yeux du conducteur sans trop détourner son regard de la route. L'écran d'affichage est avantageusement situé au-dessus de l'écran de commande, pour que le regard du conducteur qui s'y attarde plus que sur l'écran de commande, puisse conserver en vision périphérique la vue de la route ou de la scène située devant le véhicule qu'il conduit. L'écran d'affichage peut aussi de préférence afficher d'autres informations que les seules informations en provenance de l'écran de commande.

De préférence, en réponse à l'activation de certaines touches tactiles de l'écran de commande, une nouvelle fenêtre est affichée sur l'écran d'affichage. Ainsi, l'affichage de retour d'information est plus facilement visible pour le conducteur, et ce sans qu'il ait trop besoin de détourner son regard de la route ou qu'il ait besoin de le détourner trop longtemps. Pour être plus facilement remarquable, la nouvelle fenêtre affichée utilise de préférence d'environ un tiers à la moitié de la largeur disponible, ainsi que plus des trois quarts de la hauteur disponible, sur l'écran d'affichage. De préférence, cette nouvelle fenêtre d'affichage de retour d'information suite à actionnement de commande, est toujours affichée dans la même zone de l'écran d'affichage, pour que le regard du conducteur ne la cherche pas trop sur l'écran d'affichage, par exemple à droite de l'écran d'affichage.

Avantageusement, l'affichage de la nouvelle fenêtre s'accompagne de l'effacement d'au moins certaines informations affichées sur l'écran d'affichage et situées en dehors de la zone d'affichage de ladite nouvelle fenêtre. Ainsi l'attention du conducteur est mieux centrée sur la nouvelle fenêtre puisqu'on lui a enlevé de surcroît des informations voisines qui auraient pu le distraire et capter indûment son attention.

Selon l'invention, il est aussi prévu un véhicule automobile comprenant une planche de bord intégrant une interface homme machine de commande selon l'invention. Le véhicule automobile est de préférence une voiture.

L'invention va maintenant être décrite plus en détail à l'aide des figures ci-après, données à titre d'exemples illustratifs et non limitatifs, où :
- la figure 1 représente schématiquement deux exemples de pages d'affichage de l'écran de commande réparties sur deux niveaux contigus dans l'arborescence des fonctions d'aide à la conduite, pour une interface selon l'invention ;
- la figure 2 représente schématiquement plusieurs exemples de pages d'affichage de l'écran de commande réparties sur deux niveaux contigus dans l'arborescence des fonctions d'aide à la conduite, pour une interface selon l'invention ;
- les figures 3 à 6 représentent schématiquement plusieurs exemples de pages d'affichage de l'écran de commande représentées sur le niveau inférieur représenté sur la figure 2.

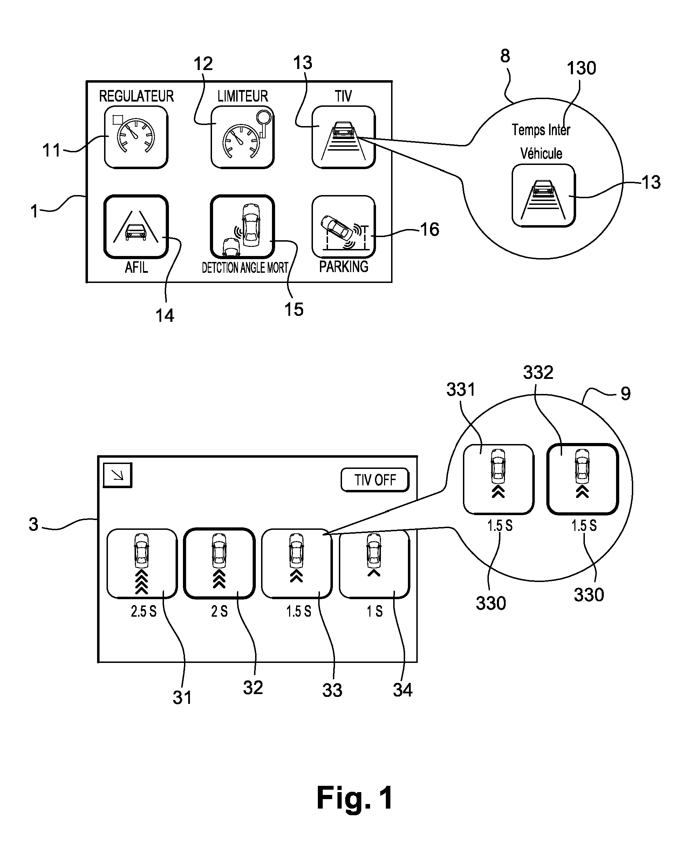

La figure 1 représente schématiquement deux exemples de pages d'affichage de l'écran de commande réparties sur deux niveaux contigus dans l'arborescence des fonctions d'aide à la conduite, pour une interface selon l'invention. On passe de la page d'affichage 1, qui est un niveau plus haut dans l'arborescence que la page d'affichage 3, à la page d'affichage 3 qui est un niveau plus bas dans l'arborescence que la page d'affichage 1 , en appuyant sur la touche tactile 13.

Sur la page d'affichage 1 , sont situées six touches tactiles 11 à 16 représentant des fonctions d'aide à la conduite. La touche tactile 11 représente la régulation de vitesse. La touche tactile 12 représente la limitation de vitesse. La touche tactile 13 représente l'aide au respect du temps inter véhicules. La touche tactile 14 représente l'alerte au franchissement involontaire de ligne. La touche tactile 15 représente la détection d'angle mort. La touche tactile 16 représente l'aide au parking. Un zoom 8 de la touche tactile 13 présente l'explication textuelle 130 de cette touche tactile 13, située au-dessus d'elle car la touche tactile 13 est sur la ligne du haut, à savoir « temps inter véhicule ».

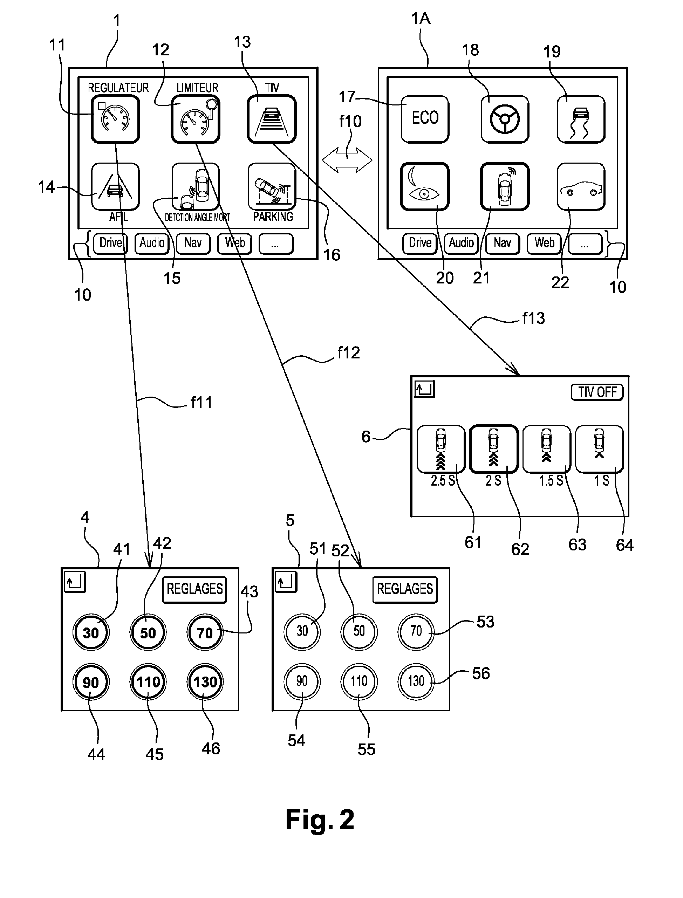

Sur la page d'affichage 3, sont situées quatre touches tactiles 31 à 34 représentant des fonctions d'aide à la conduite. Les touches tactiles 31 à 34 représentent respectivement la fixation du temps inter véhicules à respecter à des valeurs valant respectivement 2.5 secondes, 2 secondes, 1.5 secondes, 1 seconde. Un zoom 9 de la touche tactile 33 présente l'explication textuelle 330 de cette touche tactile 33, située au-dessous d'elle car la touche tactile 33 est sur la ligne du bas, à savoir « 1.5 s ». Par ailleurs, la touche tactile 33 peut être représentée de deux manières différentes, en surbrillance 332 pour signifier que l'option correspondante a été activée, fixation du temps inter véhicules à une valeur de 1.5 secondes, ou bien sans surbrillance 331 pour signifier que l'option correspondante n'a pas été activée. La figure 2 représente schématiquement plusieurs exemples de pages d'affichage de l'écran de commande réparties sur deux niveaux contigus dans l'arborescence des fonctions d'aide à la conduite, pour une interface selon l'invention.

Au niveau supérieur de l'arborescence des fonctions d'aide à la conduite, c'est-à-dire au même niveau que la page d'affichage 1, se situe une page d'affichage 1A qui présente d'autres fonctions d'aide à la conduite matérialisées par les touches tactiles 17 à 22. Ces fonctions d'aide à la conduite sont secondaires et moins fréquemment utilisées. Pour pouvoir y accéder, le conducteur doit, à partir de la page d'affichage 1 , faire glisser son doigt de droite à gauche sur la surface de l'écran de commande reconfigurable et la page d'affichage 1A apparaît à la place de la page d'affichage 1. En option, un simple appui à droite de l'écran permet d'obtenir le même effet. Pour revenir à la page d'affichage 1 , à partir de la page d'affichage 1 A, il suffit au conducteur de faire glisser son doigt dans l'autre sens, de gauche à droite, sur la surface de l'écran de commande reconfigurable. En option, un simple appui à à gauche de l'écran permet d'obtenir le même effet. Le passage dans un sens et dans l'autre entre les pages d'affichage 1 et 1A est symbolisé par la flèche bidirectionnelle f10. Un bandeau 10 de boutons fixes et stables présente diverses touches d'accès direct permettant d'afficher directement les menus correspondants, sur simple pression, quelque soit l'endroit où l'utilisateur se trouve dans l'arborescence de l'ensemble de toutes les fonctions disponibles, d'aide à la conduite ou autres. Une pression sur la touche tactile 11 fait apparaître la page d'affichage 4 comprenant six touches tactiles 41 à 46 représentant respectivement six valeurs de régulation de vitesse, à savoir 30, 50, 70, 90, 110 et 130 km/h, chacune de ces six valeurs de régulation de vitesse étant activée par simple pression sur la touche tactile correspondante. Ce changement de page d'affichage entre la page d'affichage 1 et la page d'affichage 4 est symbolisée par la flèche f11.

Une pression sur la touche tactile 12 fait apparaître la page d'affichage 5 comprenant six touches tactiles 51 à 56 représentant respectivement six valeurs de limitation de vitesse, à savoir 30, 50, 70, 90, 110 et 130 km/h, chacune de ces six valeurs de limitation de vitesse étant activée par simple pression sur la touche tactile correspondante. Ce changement de page d'affichage entre la page d'affichage 1 et la page d'affichage 5 est symbolisée par la flèche f12.

Une pression sur la touche tactile 13 fait apparaître la page d'affichage 6 comprenant quatre touches tactiles 61 à 64 représentant respectivement quatre valeurs de temps inter véhicules, à savoir 2.5 secondes, 2 secondes, 1.5 secondes, 1 seconde, chacune de ces quatre valeurs de temps inter véhicules étant activée par simple pression sur la touche tactile correspondante. Ce changement de page d'affichage entre la page d'affichage 1 et la page d'affichage 6 est symbolisée par la flèche f13.

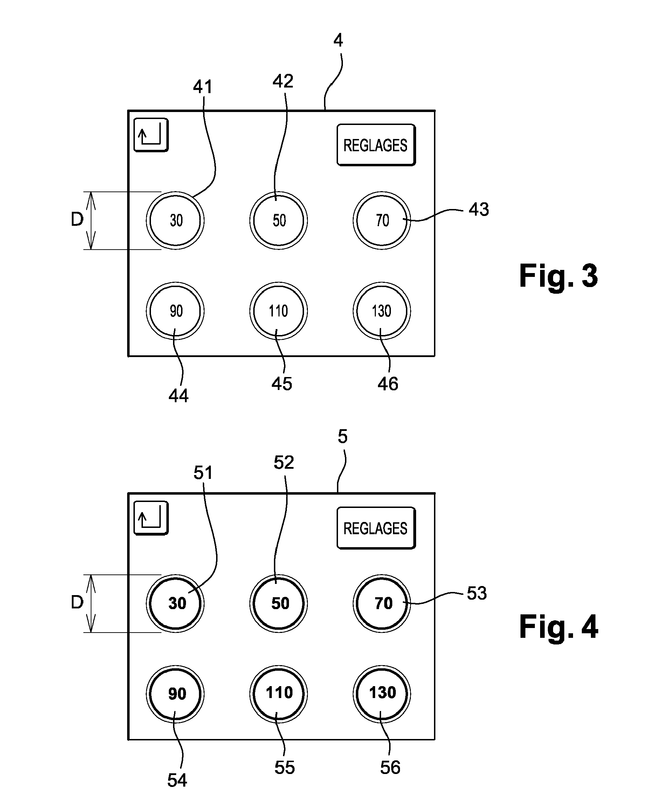

Les figures 3 à 6 représentent schématiquement plusieurs exemples de pages d'affichage de l'écran de commande représentées sur le niveau inférieur représenté sur la figure 2.

Sur la figure 3, comme sur la figure 4, sont représentées des touches tactiles 41 à 46 sur la page d'affichage 4 et 51 à 56 sur la page d'affichage 5 qui sont toutes de forme ronde et qui présentent toutes un diamètre D. Pour qu'un carré de 2cm de côté soit entièrement recouvert par chacune d'entre elles, il faut que le diamètre D soit supérieur ou égal à 2.83cm. Pour qu'un carré de 3cm de côté soit entièrement recouvert par chacune d'entre elles, il faut que le diamètre D soit supérieur ou égal à 4.25cm. Pour que chacune d'entre elles soit entièrement incluse dans un carré de 5cm de côté, il faut que le diamètre D soit inférieur ou égal à 5cm.

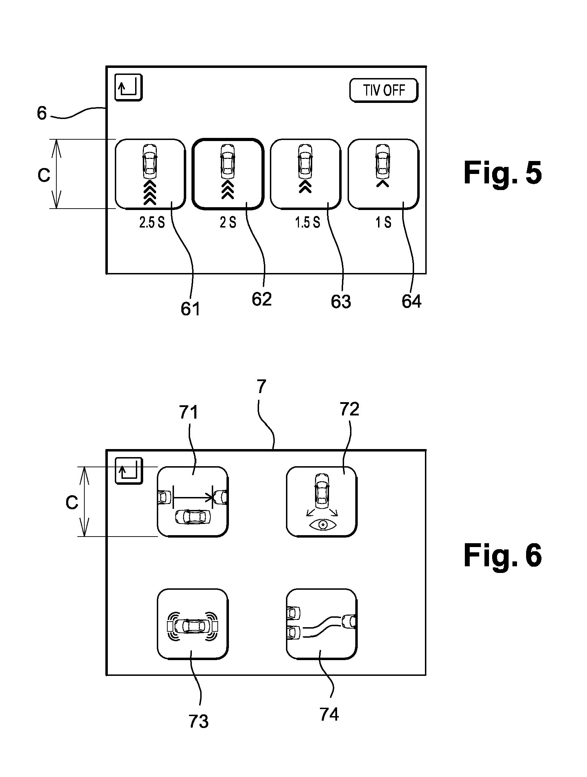

Sur la figure 5, comme sur la figure 6, sont représentées des touches tactiles 61 à 64 sur la page d'affichage 6 et 71 à 74 sur la page d'affichage 7 qui sont toutes de forme carré, avec des congés aux angles, et qui présentent toutes le même côté C. Pour qu'un carré de 2cm ou de 3cm de côté soit entièrement recouvert par chacune d'entre elles, il faut respectivement que le côté C soit légèrement supérieur à 2cm ou à 3cm, dépendant du diamètre du congé aux angles. Pour que chacune d'entre elles soit entièrement incluse dans un carré de 5cm de côté, il faut que le côté C soit inférieur ou égal à 5cm, sans égard pour la valeur du congé aux angles.

La touche tactile 71 représente une fonction de mesure de longueur de place disponible. La touche tactile 72 représente l'activation d'une caméra de recul. La touche tactile 73 représente l'activation d'un radar de proximité. La touche tactile 74 représente soit une fonction de parking assisté soit une fonction de parking automatique.

## Revendications

1. Interface homme machine de commande de véhicule automobile, comprenant un écran de commande reconfigurable qui présente des touches tactiles (11 à 74) dont le nombre, l'emplacement et les fonctions représentées peuvent varier, et dont l'actionnement active les fonctions représentées, **caractérisée en ce que**, au moins une page d'affichage (1, 1A, 3, 4, 5, 6, 7) de l'écran de commande comprend plusieurs touches tactiles (11 à 74) représentant des fonctions d'aide à la conduite de véhicule automobile.

2. Interface homme machine de commande de véhicule automobile selon la revendication 1, **caractérisée en ce que** l'écran de commande est un écran à retour haptique.

3. Interface homme machine de commande de véhicule automobile selon la revendication 2, **caractérisée en ce que** l'écran de commande est complètement lisse.

4. Interface homme machine de commande de véhicule automobile selon l'une quelconque des revendications précédentes, **caractérisée en ce que,** pour plusieurs de ces touches tactiles (11 à 74) représentant des fonctions d'aide à la conduite de véhicule automobile, la touche tactile recouvre entièrement au moins un carré de 2 cm de côté.

5. Interface homme machine de commande de véhicule automobile selon la revendication 4, **caractérisée en ce que**, pour plusieurs de ces touches tactiles (11 à 74) représentant des fonctions d'aide à la conduite de véhicule automobile, la touche tactile est entièrement incluse dans un carré de 5 cm de côté.

6. Interface homme machine de commande de véhicule automobile selon la revendication 4 ou 5, **caractérisée en ce que**, pour toutes les touches tactiles (11 à 74) représentant des fonctions d'aide à la conduite de véhicule automobile, la touche tactile d'une part recouvre entièrement au moins un carré de 2 cm de côté.

7. Interface homme machine de commande de véhicule automobile selon la revendication 4 à 6, **caractérisée en ce que**, pour plusieurs de ces touches tactiles (11 à 74) représentant des fonctions d'aide à la conduite de véhicule automobile, la touche tactile d'une part recouvre entièrement au moins un carré de 3 cm de côté.

8. Interface homme machine de commande de véhicule automobile selon l'une quelconque des revendications précédentes, **caractérisée en ce que** chaque page d'affichage (1, 1 A, 3, 4, 5, 6, 7) de touches tactiles (11 à 74) représentant des fonctions d'aide à la conduite de véhicule automobile comprend au maximum 6 touches tactiles représentant des fonctions d'aide à la conduite de véhicule automobile.

9. Interface homme machine de commande de véhicule automobile selon la revendication 8, **caractérisée en ce que** chaque page d'affichage (1, 1A, 3, 4, 5, 6, 7) de touches tactiles (11 à 74) représentant des fonctions d'aide à la conduite de véhicule automobile comprend au minimum 4 touches tactiles représentant des fonctions d'aide à la conduite de véhicule automobile.

10. Interface homme machine de commande de véhicule automobile selon l'une quelconque des revendications précédentes, **caractérisée en ce que** l'écran de commande est rectangulaire et **en ce qu'**il comprend au plus deux lignes de touches tactiles représentant des fonctions d'aide à la conduite et au plus trois colonnes de touches tactiles représentant des fonctions d'aide à la conduite.

11. Interface homme machine de commande de véhicule automobile selon la revendication 10, **caractérisée en ce que** d'une part au-dessus de chacune des touches tactiles de la ligne du haut est disposée une explication textuelle (130) de la touche tactile correspondante (13) et d'autre part au-dessous de chacune des touches tactiles de la ligne du bas est disposée une explication textuelle (330) de la touche tactile correspondante (33).

12. Interface homme machine de commande de véhicule automobile selon l'une quelconque des revendications précédentes, **caractérisée en ce que** parmi la ou les fonctions d'aide à la conduite, se trouvent un ou plusieurs des types de fonctions suivantes : régulation de vitesse avec ou sans respect de temps inter véhicules, limitation de vitesse, alerte au franchissement involontaire de ligne, aide au parking.

13. Planche de bord de véhicule automobile intégrant une interface homme machine de commande selon l'une quelconque des revendications précédentes et un écran d'affichage d'information au moins à la demande de l'écran de commande, physiquement distinct de l'écran de commande.

14. Planche de bord de véhicule automobile selon la revendication 13, **caractérisée en ce que,** en réponse à l'actionnement de certaines touches tactiles de l'écran de commande, une nouvelle fenêtre est affichée sur l'écran d'affichage.

15. Planche de bord de véhicule automobile selon la revendication 14, **caractérisée en ce que** l'affichage de la nouvelle fenêtre s'accompagne de l'effacement d'au moins certaines informations affichées sur l'écran d'affichage et situées en dehors de la zone d'affichage de ladite nouvelle fenêtre.

16. Véhicule automobile comprenant une planche de bord selon l'une quelconque des revendications 13 à 15.
